# EUROPEAN PATENT APPLICATION

(11) **EP 0 705 963 A1**
(43) Date of publication of application: **10.04.1996**
(21) Application number: 95114337.9
(22) Date of filing: 12.09.1995
(51) Int. Cl.: F01N 3/28, F01N 3/20

(54) **Apparatus for catalytic purification of exhaust gas from internal combustion engines**

(30) Priority: 12.09.1994 PL 30503494
(71) Applicant: Baildon, Huta, PL-40 952 Katowice (PL)
(72) Inventor: Lejawka, Jerzy, PL-40-867 Katowice (PL); Zabrzeski, Jerzy, Prof. Dr., PL-54-239 Wroclaw (PL); Gluszek, Jozef, Prof. Dr., PL-52-230 Wroclaw (PL); Czado, Tadeusz, PL-40-855 Katowice (PL); Matysik, Stefan, PL-42-640 Piekary Slaskie (PL); Murski, Jerzy, PL-40-867 Katowice (PL); Stepien, Boguslaw, PL-40-855 Katowice (PL); Wieloch, Pawel, PL-40-850 Katowice (PL)
(74) Representative: Füchsle, Klaus, Dipl.-Ing.

(57) **Abstract**

The subject of the invention is apparatus for catalytic purification of gases from combustion engines.

The apparatus according to the invention is characterized by that a package (1) consisting of pieces of flat foil (2) and pieces of longitudinally corrugated foil (3) alternately laid ono on another in a bellows-like shape and coated with a catalytic layer is accommodated in a two half shells housing (4) by means of a grip (12). A magnetizer (9) is mounted at the inlet (8) of the converter (1).

## Description

The subject of this invention is an apparatus for catalytic purification of gases from combustion engines, particularly those with spark ignition.

Those skilled in Art know from the Polish Application of utility pattern No. 101000 apparatus for catalytic purification of gases from combustion engines, having casing of an oval shape accommodating an insert in the form of undulated and flat metal sheets coated with a catalytic layer alternately laid one on another and spirally wound around two parallel axes. Undulated strips are rolled transversally between toothed rolling mills, whose cutting-in profile is an equilateral triangle.

Drawback of this apparatus is its oval shape and the method of production thereof. In the course of the rolling process catalytic coating cracks over the fold peaks, thus damaging the insert.

Also known is from the Polish Patent Application No. 298906 apparatus for purification of gases from combustion engines, consisting of a box-like metal casing with two openings: inlet and outlet one, accommodating shapes mode from flat sheets and folded sheets covered with a transition layer and catalyst, lying alternately one on another. Said shapes have identical dimensions and have the form of a rectangle.

Main drawback of this solution consists in that the plates being the insert are mounted separately. This requires, similarly as in the previous solution, soldering of layers, which in practice appeared to be difficult and often did not give the desired result. Still another drawback is the method of production of the folded layer. Folded shapes are produced on a press. The shape when being folded between the punch and the die often cracks, which leads in effect to considerable losses of the material being used.

The nature of the apparatus according to the invention consists in that the package consisting of alternately and transversally laid flat foil and longitudinally folded foil coated with a catalytic layer has the shape of a bellows and is accommodated in a bi-partite jacket consisting of two halves by means of a grip. The flat foil over its entire length has uniformly spaced cuts. The longitudinally folded foil has folds arranged in such a way that the distance between the fold peaks increases from the longitudinal axis toward the foil edge. Said longitudinally folded foil is perforated and has cuts uniformly distributed over its entire length. At the inlet of the combustion gases to the bi-partite jacket there is a magnetizer consisting of two rings which are closed in a housing. Said jacket is insulated with a thermo-insulating layer.

One of the advantages of the apparatus is the fact that both catalytic layers consist from two foils which are appropriately folded in such a way that they form a rigid package and do not require soldering. The folding method does not damage the catalytic layer and does not lead to cracking of the material. Because of the foil folding method being used the catalytic layer can be applied after the production of folds. Magnetizer situated at the inlet of the combustion gases improves the efficiency of the apparatus, whereas the insulating layer prevents emission of heat into the environment of the apparatus.

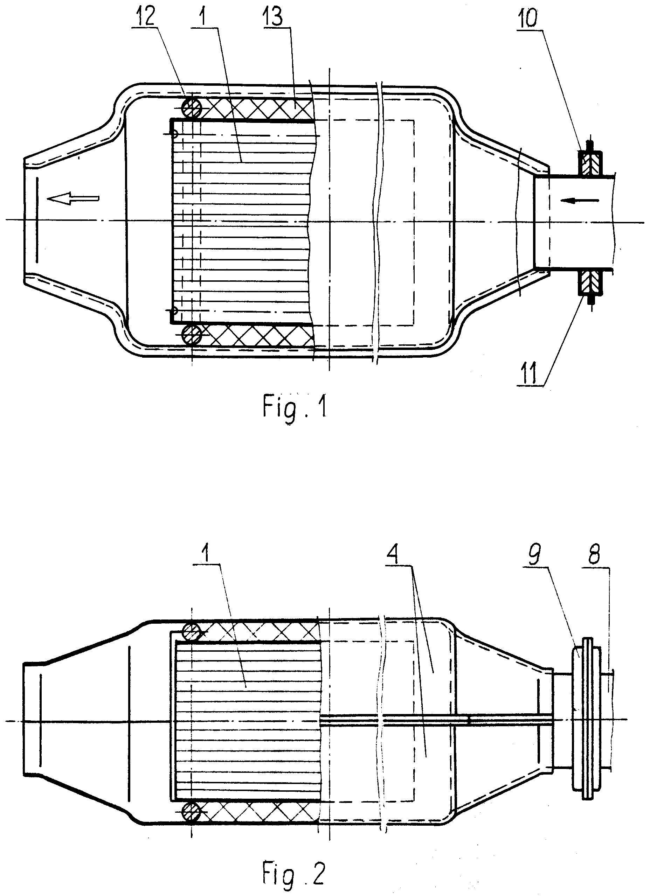

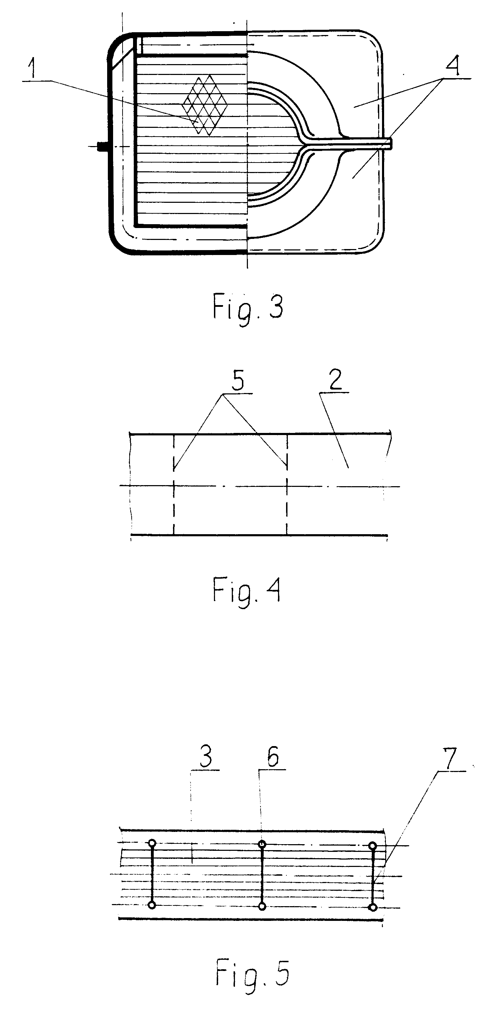

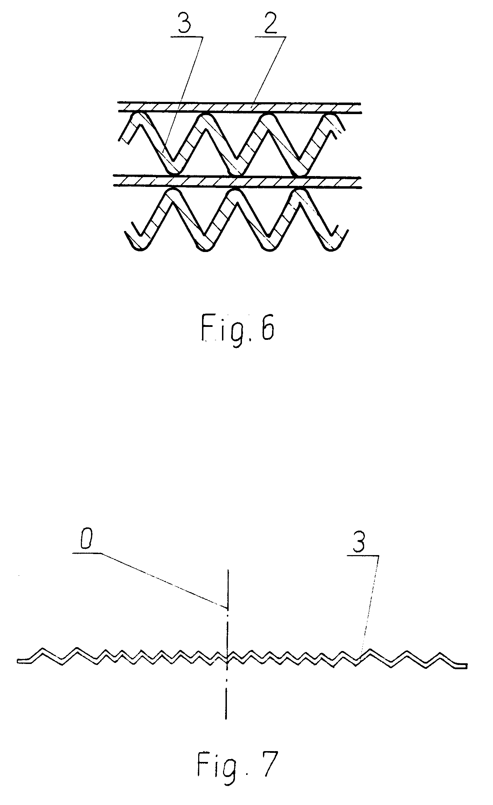

The subject of the invention has been shown on the accompanying figure, wherein Fig. 1 presents the apparatus in half-view half-section looked upon from above. Fig. 2 illustrates the apparatus shown in half- view half-section looked upon from the side. Fig. 3 shows the apparatus in -view half-section when looked upon from the side of the inlet of combustion gases, Fig. 4 visualizes a flat foil. Fig. 5 presents a longitudinally folded foil. Fig. 6 shows a fragment of a package, Fig. 7 presents the arrangement of folds in the longitudinally folded foil

The apparatus according to the invention will be explained in detail on an example of embodiment.

In a bi-partite jacket 4 there is mounted package 1 by means of grip 12. Package 1 consists of a flat foil 2 and longitudinally folded foil 3. Both foils 2 and 3 coated with a catalytic layer are alternately and transversally laid in a bellows-like manner. The longitudinally folded foil has folds arranged in such a way that the distance between the fold peaks increases from longitudinal axis ○ toward the edge of the foil 3. The longitudinally folded foil 3 has perforations 6 and cuts-ins 7, uniformly distributed over its entire length. On the flat foil there are also cuts 5 uniformly distributed over its length. At the inlet 8 of the combustion gases into the jacket 4 there is a magnetizer 9 consisting of two rings 10. accommodated in a closed housing. Between the package 1 and the grip 12 there is thermo- insulating layer 13.

Apparatus is produced in such a way that cuts 5 uniformly distributed over the entire length of the said foil are made on the flat foil 2 coated with a catalytic layer. Prior to folding the foil 3 cuts uniformly spaced over its length are being made and perforations are being made at the ends of the foil 3. Next the foil 3 is being rolled and passes first through one pair of roll mills, where one fold is made, and next through the subsequent ten pairs of milling rolls in such a way that after passing through each pair of rolls a pair of folds is added. Both the flat foil 2, as well as the longitudinally folded foil 3 is being folded at the cuts 5 and 7. Next both foils 2 and 3 are being alternately and transversally laid one on another so that they obtain a bellows-like shape. The compact package 1 is being fixed in grips 12 and then in two-partite jacket 4 with a previously placed thermo-insulating layer 13. Finally, both halves of the jacket 4 are being soldered and at the inlet 8 of the combustion gases to the jacket 4 there is mounted magnetizer 9.

## Claims

1. Apparatus for catalytic purification of gases from combustion engines, provided with a package of flat and folded shapes in the form of a foil coated with a catalytic layer end placed in a housing, characterized in that the package (1) consisting of a flat foil (2) and longitudinally folded foil (3) alternately and transversally laid so that they obtain a bellows-like shape is located in a bi-partite jacket (4) by means of a grip (12).

2. Apparatus as per Claim 1, characterized in that flat foil (2) has transversal cuts (5) uniformly spaced over its length.

3. Apparatus as per Claim 1, characterized in that the distance between the fold peaks grows from the longitudinal axis (○) toward the edge of the longitudinally folded foil (3).

4. Apparatus as per Claim 1, characterized in that the longitudinally folded foil (3) has perforations (6) and cuts (7) uniformly spaced over its length.

5. Apparatus as per Claim 1, characterized in that at the inlet) (8) of the combustion gases into the bi-partite jacket (4) there is a magnetizer (9). .

6. Apparatus as per Claim 5, characterized in that magnetizer consists of two rings (10) accommodated in a housing (11).

7. Apparatus as per Claim 1, characterized in that said bipartite jacket (4) is insulated by a heat insulation (13).
